## Europäisches Patentamt

## European Patent Office

## Office européen des brevets

(11) Veröffentlichungsnummer: **0 231 817**
**A2**

## (12) EUROPÄISCHE PATENTANMELDUNG

(21) Anmeldenummer: **87100799.3**

(22) Anmeldetag: **21.01.87**

(51) Int. Cl.4: **A23P 1/08** , A23K 1/00 ,
B05C 3/08 , B05B 13/02

(30) Priorität: **03.02.86 CH 399/86**

(43) Veröffentlichungstag der Anmeldung:
**12.08.87 Patentblatt 87/33**

(84) Benannte Vertragsstaaten:
**CH DE FR IT LI NL SE**

(71) Anmelder: **Gebrüder Bühler AG**

**CH-9240 Uzwil(CH)**

(72) Erfinder: **Millauer, Christian**
**Buelstrasse 9**
**CH-9244 Niederuzwil(CH)**

(54) **Verfahren zum Herstellen von Formlingen eines Nahrungsmittels sowie Anlage und Besprühtrommel hierfür.**

(57) Zum Herstellen von Formlingen (44) ist üblicherweise eine Mischeinrichtung (4, 4a) vorgesehen, durch die auch gesundheitsfördernde Mittel, wie Vitamine, Medikamente od.dgl., beigemischt werden können. Die mit dem Formvorgang verbundene thermische Behandlung, z.B. durch Zugabe von Dampf über einen Dampfeinlass (5), sowie auch die mechanische Beanspruchung führen aber zu einer weitgehenden Zerstörung dieser Mittel, weshalb vorgeschlagen wird, diese Mittel erst nach dem Formen durch Aufbringen des gesundheitsfördernden Mittels auf die Oberfläche der Formlinge (44) beizumischen. Hierzu weist eine Anlage zur Durchführung des Verfahrens eine Mischeinrichtung (19) auf, die nach der entsprechenden Formeinrichtung (2, 2a) angeordnet ist. Eine solche Mischeinrichtung ist bevorzugt als Besprühungstrommel (19) mit einer Aufsprüheinrichtung (20) für das gesundheitsfördernde Mittel ausgebildet.

Fig.1

EP 0 231 817 A2

## VERFAHREN ZUM HERSTELLEN VON FORMLINGEN EINES NAHRUNGSMITTELS SOWIE ANLAGE UND BESPRÜHTROMMEL HIERFÜR

Die Erfindung betrifft ein Verfahren nach dem Oberbegriff des Anspruches 1, eine Anlage zur Durchführung dieses Verfahrens und eine Besprühtrommel für eine solche Anlage.

Nahrungsmittel für Mensch und Tier kommen häufig als Formlinge auf den Markt, wobei oft eine Zumischung von Vitaminen oder anderen gesundheitsfördernden Mitteln (z.B. Pantothensäure) erfolgt. Insbesondere wird Mischfutter heute für verschiedenste Tiere meist aus unterschiedlichen Komponenten zusammengemischt, die dann zur Verhinderung einer Entmischung anschliessend gepresst werden. Unter diesen Komponenten befindet sich im allgemeinen wenigstens ein -im veterinärmedizinischen Sinne -gesundheitsförderndes Mittel, meist Vitamine, gelegentlich aber auch (z.B. im Falle von Seuchen) ein Medikament bzw. Behandlungspräparat. Nun ist es bekannt, dass verschiedene Vitamine (und ebenso verschiedene Medikamente) sehr leicht zerstörbar sind, vor allem unter dem Einflusse höherer Temperaturen. Anderseits ist es ebenso bekannt, dass sich gewisse Komponenten des Mischfutters nur schwer verpressen lassen, weshalb vielfach bindende Komponenten, wie Melasse od.dgl., beigemischt werden. Das Ganze erfolgt in einer heissen Masse, der Dampf zugeführt wird, worauf die mit den Vitaminen usw. vermischte Masse in einer Rollen-Pelletpresse, einem Extruder oder einer anderen Presseinrichtung zu Formlingen geformt wird. Andere Presseinrichtungen sind beispielsweise kollergangähnliche Pressen, bei denen Pressrollen auf einer ebenen Matrize abgewälzt werden, Walzenpressen mit den Formlingen entsprechenden Ausnehmungen u.dgl.. Man nimmt bei dieser Behandlung in Kauf, dass durch die dem eigentlichen Pressen vorangehenden Wärmebehandlung ein nicht unbeträchtlicher Teil der Vitamine zerstört wird. Bisher sah man keinen Ausweg aus der Anforderung, erst eine gewünschte Mischung herstellen und anschliessend durch Pressen fixieren zu müssen bzw. das Endprodukt (im Falle von Nahrungsmitteln für den Menschen) in die am Markt erwartete Form zu bringen.

Um den dabei auftretenden Verlust an Vitaminen, Medikamenten od.dgl. auszugleichen, wurden diese gesundheitsfördernden Mittel in einem entsprechenden Überschuss beigegeben. Nun sind just solche Mittel nicht gerade billig, und man musste daher beim herkömmlichen Verfahren einen erheblichen Mehraufwand für die zuerst zugegebenen und dann im Laufe der Behandlung wieder vernichteten Mittel treiben, was zu einer Verteuerung der Formlinge führte.

Der Erfindung liegt die Aufgabe zugrunde ein Verfahren der im Oberbegriff des Anspruches 1 genannten Art so weiter zu entwickeln, dass ein grösserer Anteil der gesundheitsfördernden Mittel erhalten bleibt und damit Kosten für den sonst erforderlichen Überschuss eingespart werden können. Erfindungsgemäss gelingt dies durch die Merkmale des Kennzeichens des Anspruches 1. Dadurch, dass das Beimischen erst nach dem Formen, d.h. nach jenem Vorgang erfolgt, der eine Wärmebehandlung des Ausgangsmateriales erforderlich macht, wird eine Zerstörung der gesundheitsfördernden Mittel durch thermische Einwirkung vermieden. Freilich wird es dadurch in den meisten Fällen erforderlich sein, den Mischvorgang in zwei von einander zeitlich getrennten Stufen auszubilden, dann nämlich, wenn (wie dies im allgemeinen der Fall ist) ausser den gesundheitsfördernden Mitteln auch andere Komponenten beigemischt und mit verpresst bzw. geformt werden sollen. Diese Komponenten werden dann vor dem Formen beigemischt, die gesundheitsfördernden Mittel hingegen erst nachher.

An sich wäre das Aufbringen des gesundheitsfördernden Mittels auf die Oberfläche der Formlinge durch die verschiedensten Massnahmen möglich, beispielsweise durch eine Art Dragierverfahren, durch Einlegen der Formlinge in eine Lösung des gesundheitsfördernden Mittels usw. Bevorzugt erfolgt jedoch das Beimischen durch Aufsprühen des gesundheitsfördernden Mittels auf die Oberfläche des Formlinge und/oder unter Wälzen der Formlinge in einer, das gesundheitsfördernden Mittel enthaltenden Umgebung. Die letztere Massnahme könnte beispielsweise so erfolgen, dass die Formlinge in einer Schüttung geringer Höhe des gesundheitsfördernden Mittels gewälzt werden und dabei ein Teil der Vitamine und/oder Medikamente an der Oberfläche haften bleibt. Zwar kann es dadurch geschehen, dass relativ viel Material aus der Schüttung an die Oberfläche der Formlinge gelangt und dort haften bleibt, doch lässt sich dies einfach dadurch einstellen, dass den gesundheitsfördernden Mitteln auch andere Mittel beigemengt werden, so dass am Ende das gewünschte Verhältnis wieder erhalten wird. Diese anderen beigemischten Mittel können ebenso fest wie flüssig sein. Ein Optimum wird jedoch erreicht, wenn beide erwähnten Massnahmen, d.h. das Aufsprühen und das Wälzen vorgenommen wird, insbesondere deshalb, weil beim Aufsprühen die richtige Dosierung leichter eingestellt werden kann.

Wie aus dem Obigen hervorgeht, kann das gesundheitsfördernde Mittel an sich auch in einer, z.B. wässrigen, Lösung aufgebracht werden. Vielfach sind aber solche Mittel schlecht löslich, weshalb es bevorzugt ist, wenn das Beimischen des gesundheitsfördernden Mittels im trockenen Zustand erfolgt. Im allgemeinen wird dies in Form eines trockenen Pulvers geschehen, einerseits weil so das Aufbringen am einfachsten erfolgt, anderseits, weil das Mittel im allgemeinen als Pulver angeliefert wird. In besonderen Fällen könnte es sich aber auch um Fasersubstanzen handeln, die mit dem gesundheitsfördernden Mittel getränkt sind.

Da die Prozentsätze solcher gesundheitsfördernden Mittel sehr gering sind, ergibt sich eine bessere Verteilung eines solchen Mittels auf den Formlingen, wenn das Pulver eine Korngrösse von höchstens 0,2 mm, zweckmässig höchstens 0,1 mm besitzt. Anderseits erhöhen sich die Kosten eines solchen Pulvers mit seiner Feinheit, weshalb sich besonders ein Feinheitsbereich von 0,01 bis 0,08 mm als zweckmässig erweist. Unterhalb dieses Bereiches liegende Korngrössen bringen hinsichtlich der Verteilung keine wesentliche Verbesserung mehr, so dass die Kosten den Nutzen in den meisten Fällen überwiegen werden.

Die Menge an an den Formlingen haftend bleibenden gesundheitsförderndem Mittel kann noch erhöht werden, wenn wenigstens ein gesundheitsförderndes Mittel unter, bevorzugt gleichzeitiger, Zugabe eines Haftvermittlers, z.B. einer flüssigen Substanz, vorzugsweise wenigstens einer essbaren Substanz, wie Gelatine, Stärke, Pektine, Proteine, bevorzugt einer Fettsubstanz, insbesondere Öl, gegebenenfalls in Form einer Lösung oder Suspension in dieser Substanz, beigemischt wird. Es ist bekannt, dass manche Vitamine (und dies gilt auch für manche Medikamente), insbesondere das Vitamin A, vom Körper nur gemeinsam mit einer Fettsubstanz aufgenommen werden kann und die Aufnahme in Form einer Lösung leichter erfolgt. Es ist daher vorteilhaft, wenn das gesundheitsfördernde Mittel, wie erwähnt, zusammen mit einer flüssigen Substanz, vorzugsweise einer Fettsubstanz, insbesondere Oel, beigemischt wird. Dies muss nicht notwendigerweise in Form einer Lösung oder Suspension in dieser Substanz erfolgen, obwohl dies bevorzugt ist. Eine andere Möglichkeit wäre das gleichzeitige oder unmittelbar aufeinanderfolgende Aufsprühen der Fettsubstanz und des trockenen oder in einem Lösungsmittel gelösten Mittels, beispielsweise in einer Lösung oder Suspension in Alkohol, der dann grösstenteils verdunstet und beispielsweise mittels einer in der Trommel angeordneten Saugvorrichtung abgesaugt werden kann.

Eine apparative Vereinfachung als auch eine bessere Vermischung ergibt sich sowohl, wenn das Beimischen in einem gemeinsamen Apparat, insbesondere in einer Fettbesprühungstrommel erfolgt. Dabei ist man hinsichtlich dieses gemeinsamen Apparates keineswegs auf eine Fettbesprühungstrommel beschränkt, wie überhaupt die verschiedensten Apparate eingesetzt werden können, die üblicherweise zum Mischen eingesetzt werden. Ein besonders geeigneter Apparat ist beispielsweise in der EP-OS 157 250 beschrieben, der als Saatgut-Beizapparat ausgebildet ist und bei dem sowohl ein Aufsprühen, als auch ein Abwälzen der einzelnen Partikel erfolgt. Da die Formlinge allerdings im allgemeinen weniger stark beanspruchbar sind als Saatkörner, wird dieser Beizapparat für die vorliegenden Zwecke mit einer geringeren Drehzahl seines Abwälztellers zu betreiben sein, um nicht eine Prallwirkung auf die Formlinge auszuüben.

Wenn allerdings das gesundheitsfördernde Mittel sowie eine flüssige Substanz nach dem Formen erst auf die Oberfläche der Formlinge aufgebracht wird und dabei das gesundheitsfördernde Mittel in trockenem Zustande vorliegt, so ist es zweckmässig, wenn das gesundheitsfördernde Mittel im trockenen Zustande vor dem Aufsprühen der flüssigen Substanz auf die Formlinge aufgebracht wird, weil sich sonst allzu leicht Ungleichmässigkeiten ergeben.

Eine Anlage zum Herstellen von Formlingen eines Nahrungsmittels weist üblicherweise eine Formeinrichtung zum Herstellen der Formlinge und eine Mischeinrichtung zum Beimischen wenigstens eines gesundheitsfördernden Mittels auf. Die erfindungsgemässe Anlage ist dabei dadurch gekennzeichnet, dass die Mischeinrichtung für das gesundheitsfördernde Mittel nach der Formeinrichtung angeordnet ist. Es wurde oben bereits erläutert, dass vor der Formeinrichtung eine zusätzliche Mischeinrichtung für verschiedene Komponenten der Formlinge vorgesehen sein kann. Dabei wird es zweckmässig sein, wenn der Eingang der nachgeschalteten Mischeinrichtung mit dem Ausgang der Formeinrichtung über wenigstens eine Fördereinrichtung verbunden ist, nicht zuletzt deshalb, weil so eine rasche Ueberstellung des fertig geformten Nahrungsmittels an die Mischeinrichtung gesichert ist.

Für eine derartige Anlage ist gemäss einer weiteren Ausgestaltung vorzugsweise eine Besprühungstrommel vorgesehen, die in herkömmlicher Weise einen einen Hohlraum umschliessenden Trommelmantel besitzt, in dem wenigstens eine Besprühungseinrichtung angeordnet ist. Eine derartige Besprühungstrommel zeichnet sich nun erfindungsgemäss nach einer ersten Ausgestaltung dadurch aus, dass die Besprühungseinrichtung eine Pulversprüheinrichtung ist, die alleine oder zusammen mit einer Fettbesprühungseinrichtung in der Trommel angeordnet ist. Pulversprüheinrichtungen sind beispielsweise für das Pulverlackieren in verschiedener Ausführung, insbesondere als elektrostatische Pulversprüheinrichtungen bekannt geworden (vgl. z.B. die DE-OS 30 12 877), die dabei ebenfalls einsetzbar sind. Der Mischer bzw. die Trommel spielt dabei jeweils die Rolle der Sprühkabine.

Bevorzugt weist jedoch die Pulversprüheinrichtung mindestens eine Injektoreinrichtung mit einer Injektordüse auf, wodurch die Einrichtung relativ einfach gehalten werden kann. Diese Injektoreinrichtung weist zur besseren Verteilung vorteilhaft eine in den Hohlraum ragende Lanze auf. Man sollte annehmen, dass die günstigsten Ergebnisse erhalten werden, wenn diese Lanze etwa bis in die axiale Mitte der Trommel reicht, doch hat es sich überraschenderweise als günstig erwiesen, wenn sich diese Lanze innerhalb des Einlassbereiches des Trommelhohlraumes erstreckt. Vermutlich liegt dies daran, dass nach dem Aufsprühen den Formlingen so Gelegenheit gegeben wird, sich entlang der Trommelwände abzuwälzen, wobei allfälliger Ueberschuss abgegeben wird, während andere Formlinge aus diesem abgegebenen Ueberschuss wieder einen Teil aufnehmen. Jedenfalls erhält man so eine besonders gute Verteilung.

Obwohl die Anordnung der Injektoreinrichtung auf die verschiedenste Weise und beispielsweise auch in Kombination mit einer Vibriereinrichtung - (z.B. zum Vibrieren bzw. Oszillieren der Lanze) kombiniert sein kann, ergeben sich die besten Bedingungen für das Aufsprühen, wenn die Injektordüse im Bereich des Einlassendes dieser Lanze vorgesehen ist, wobei dann ein Gemisch von Fluid und gesundheitsförderndem Mittel entlang der Lanze bis an das Auslassende gefördert wird. Es mag zweckmässig sein, die Lanze an ihrem Auslassende mit einer Aufweit-bzw. Vernebelungsvorrichtung zu versehen, weil so eine Mehrzahl von Auslassdüsen vermieden werden kann. Ebenso ist es vorteilhaft, der Pulversprüheinrichtung wenigstens ein Dosiergerät vorzuschalten.

Unabhängig von der oben besprochenen Ausführung einer Besprühungstrommel oder in Kombination mit einer solchen Ausgestaltung ist es vorteilhaft, wenn wenigstens zwei Besprüheinrichtungen innerhalb der Trommel angeordnet sind, wovon wenigstens eine mit einer Zufuhreinrichtung für zumindest ein gesundheitsförderndes Mittel verbunden ist. Dabei können die beiden Besprüheinrichtungen zur Aufbringung einer Flüssigkeit ausgebildet sein, falls das gesundheitsfördernde Mittel in Form einer Lösung oder Suspension beigemischt wird, doch ist eine Kombination mit der oben besprochenen Trockensprüheinrichtung am vorteilhaftesten.

Weitere Einzelheiten ergeben sich anhand der nachfolgenden Beschreibung von in der Zeichnung schematisch dargestellten Ausführungsbeispielen. Es zeigen:

Fig. 1 eine Anlage zur Durchführung des eingangs genannten Verfahrens; und

Fig. 2 einen Teil dieser Anlage, jedoch gemäss einer Ausführungsvariante.

Eine herkömmliche Anlage zum Herstellen von Formlingen eines Nahrungsmittels, insbesondere für Tiere, weist eine Anzahl von Silos 1 auf, von denen wenigstens ein Silo 1a zur Lagerung eines gesundheitsfördernden Mittels vorgesehen ist. Bei Nahrungsmittel für Tiere handelt es sich meistens um Vitamine und vitaminähnliche Substanzen (Pantothensäure, Folsäure usw., seltener auch um Medikamente). Bei Nahrungsmittel für Menschen sind meist auch Vitamine vorgesehen, doch hängt es von der Art des Nahrungsmittels (im weitesten Sinne) ab, ob nicht auch andere Stoffe mit pharmakologischer Wirkung (z.B. geriatrische Natursubstanzen usw) beigemischt werden.

Das den Silos 1 bzw. 1a entnommene Material wurde bisher verwogen bzw. dosiert und einer Formeinrichtung 2 oder 2a zugeführt. Die Formeinrichtung 2 ist als Rollenpelletpresse dargestellt, die im allgemeinen mit einer Dosiereinrichtung 3 und einer Mischeinrichtung 4 verbunden ist, welch letzterer Dampf über eine Einlassöffnung 5 zuführbar ist. Die erhaltenen Pellets werden im allgemeinen zur Tierfütterung verwendet.

Im Falle der Formeinrichtung 2a handelt es sich um einen Extruder, wie er zur Herstellung von Futtermitteln für die Tiere, aber besonders auch bei der Herstellung von Nahrungsmittel für Menschen Verwendung finden kann. Auch hier wird im allgemeinen eine Dosiereinrichtung 3a und eine Mischeinrichtung 4a vorgesehen sein, die analog zu den vorher besprochenen Einrichtungen 3, 4 aufgebaut sein können. Gerade bei Verwendung eines Extruders 2a ist es aber auch möglich, das Dosieren und Mischen innerhalb des Extruders selbst durchzuführen, falls dieser eine entsprechende Mischzone mit Mischwerkzeugen besitzt.

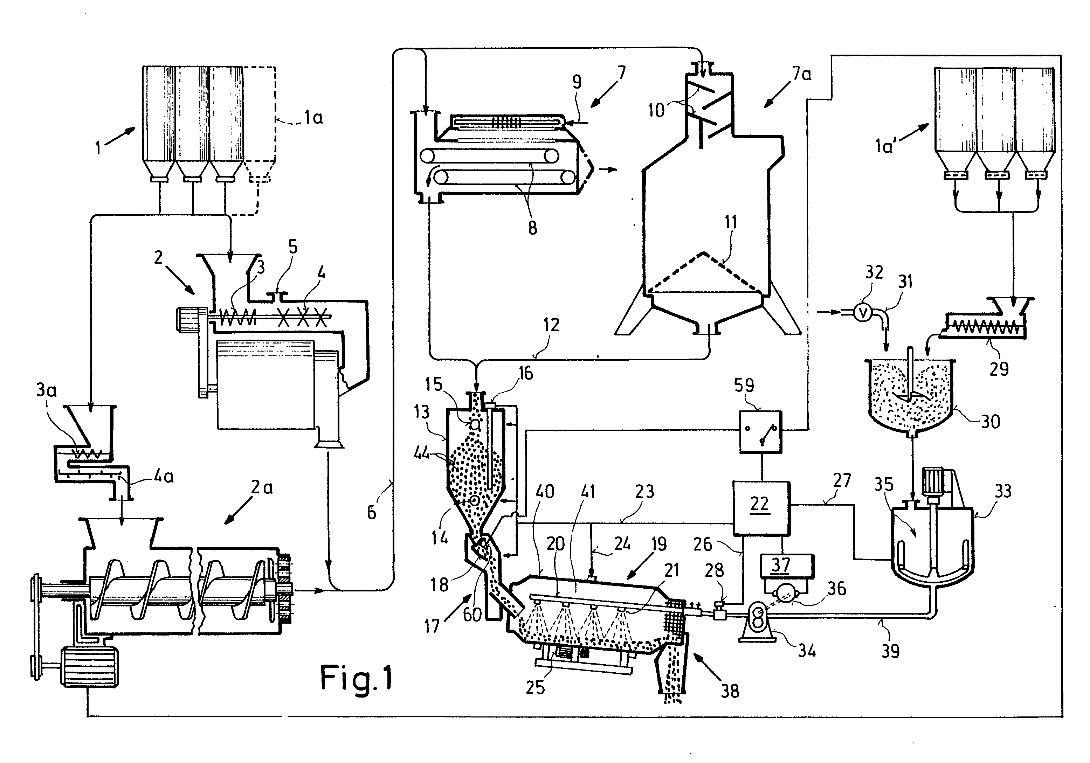

Gleichgültig wie der Formvorgang erfolgt, sei es mittels der Rollenpelletpresse 2, sei es mittels des Extruders 2a oder einer anderen Formeinrichtung, wird man am Ausgange der jeweiligen Formeinrichtung 2 bzw. 2a Formlinge erhalten, die aufgrund der vorher nötigen Erwärmung im Mischer 4 bzw. 4a noch relativ heiss und weich bzw. feucht sind und daher einer Trocknung bzw. Kühlung bedürfen. Zu diesem Zwecke werden die erzeugten Formlinge über einen Transportweg 6 geführt, der zweckmässig eine entsprechende Transporteinrichtung, z.B. einen Elevator, aufweist. Am Ende dieses Transportweges 6 sind dann wiederum zwei Möglichkeiten gegeben, um die nötige Kühlung bzw. Trocknung herbeizuführen. Fig. 1 veranschaulicht hierzu einen Bandkühler/Trockner 7, der eine Bandfördereinrichtung 8 aufweist, auf der die Formlinge abgelagert und gegebenenfalls mit Trocknungsluft über einen Einlass 9 behandelt werden. Es kann aber auch ein Gegenstromkühler 7a vorgesehen sein, in dem die Formlinge über Schikanen 10 unter Schwerkrafteinfluss transportiert werden, wobei gleichzeitig über ein konisches Sieb 11 Kühl-bzw. Trocknungsluft hindurchgeblasen wird. Diese Anordnung entspricht vorzugsweise derjenigen nach dem Schweizer Patent .... - (3770/85).

Wie immer auch die Kühlung bzw. Trocknung erfolgt (vor allem bei Nahrungsmittel für den Menschen kommen auch noch andere Trockner zur Anwendung, wie sie besonders in der Teigwarenindustrie Verwendung finden), am Ende gelangen die trockenen Formlinge 44 über einen Transportweg 12, der analog zum Transportweg 6 mit den verschiedensten Fördereinrichtungen bestückt sein kann, in ein Zwischensilo 13, das zweckmässig einen Füllstandsmesser 14 für einen minimalen Füllstand, gegebenenfalls auch einen Maximalfüllstandmesser 15 für den maximalen Füllstand und/oder eine stufenlos messende Stabsonde 16 aufweist. Dieser Zwischensilo 13 ist deshalb von Bedeutung, weil an seiner Unterseite im vorliegenden Falle ein Durchlaufmengenmesser 17 vorgesehen ist, der eine von Kraft des darauf fliessenden Materials beeinflusste Klappe 18 besitzt und diese Kraft ihrerseits von einem zu hohen bzw. zu niedrigen Siloniveau beeinflusst werden könnte. Selbstverständlich ist die Zufuhr zu einer nachgeschalteten Besprühungstrommel 19 auch auf andere Weise regelbar, doch hat sich die Kombination der Einheiten 13, 17 als besonders vorteilhaft erwiesen.

Die Besprühungstrommel 19 ist in herkömmlicher Weise mit einer Besprüheinrichtung 20 ausgebildet, die eine mit mehreren Sprühdüsen 21 versehene Lanze aufweist. Ueblicherweise wird in einer derartigen Trommel 19 zur Aufwertung des Nahrungsmittels eine flüssige Fettsubstanz aufgesprüht. Dabei wälzen sich die Formlinge innerhalb der in Drehung versetzten Trommel 19, wobei das aufgesprühte Material gleichmässig verteilt wird. Eine zugehörige Steuereinrichtung 22 erhält die Signale der Messeinrichtungen 14 bis 16 und 18, z.B. über einen Datenbus 23, über den beispielsweise auch ein Ausgangssignal der Steuereinrichtung 22 zu einer Zweigleitung 24 zur Regelung der Drehzahl eines Motors 25 zum Antrieb der Trommeln 19 geführt werden kann. Die Steuereinrichtung 22 kann auch mit einem Niveaufühler eines Reservoirs für die aufzusprühende Flüssigkeit (vgl. die Leitung 27) sowie mit einer Ausgangsleitung 26 zur Steuerung der Flüssigkeitzufuhr (Ventil 28) versehen sein.

Die bisher geschilderten Teile der Anlage sind herkömmlicher Natur. Neu dagegen ist, dass das Silo 1a für das gesundheitsfördernde Mittel an der Eingangsseite der Anlage in Wegfall kommt bzw. nicht mehr mit der Eingangsseite verbunden wird. Dieses Silo 1a kann nun innerhalb des Schemas als Silo 1a' angeordnet werden, wobei in den meisten Fällen mehrere solcher Silos 1a bzw. 1a' (von letzteren sind drei dargestellt) vorgesehen sind. Je nach dem Rezept wird also eine bestimmte Menge aus einem oder mehreren Silos 1a' an gesundheitsfördernden Mitteln entnommen, und zweckmässig über eine Dosiereinrichtung 29, einem ersten Mischer 30 zugeführt, der auch eine Flüssigkeit über eine Leitung 31 mit einem Ventil 32 erhält. Diese Flüssigkeit muss nun nicht notwendigerweise Fett sein, obwohl dies für viele Vitamine einerseits die günstigste Form ist, anderseits die Trommel 19 für den doppelten Zweck der Fettaufsprühung und der Vitaminaufsprühung bzw. Medikamentenaufsprühung od.dgl. ausnützt.

Vom Mischer 30 gelangt die fertig gemischte Lösung oder Suspension in einen Zwischenbehälter 33, von dem aus die Zufuhr zur Besprühungseinrichtung 20 mit Hilfe einer Pumpe 34 erfolgt. Der Zwischenbehälter 33 ist zur Vermeidung einer Entmischung zweckmässig mit einem Rührwerk 35 ausgerüstet. Wenn, wie dargestellt, die Pumpe 34 über einen Motor 36 antreibbar ist, der mit einer Reglerstufe 37 verbunden und vom Steuergerät 22 aus hinsichtlich seiner Drehzahl veränderbar ist, so kann die Leitung 26 mit dem Ventil 28 entfallen, doch kann das Ventil 28 zusätzlich zur Druckregulierung dienen. Das Steuergerät 22 erhält nun über den Datenbus 23 die Informationen über die der Trommel 19 zugeführte Menge, insbesondere über den Mengenregler 17, und regelt dem gemäss die Zufuhr an Lösung bzw. Suspension mit Hilfe der Regelstufe 37, so dass das Verhältnis der aufgesprühten Vitamine, Medikamente od.dgl. zur Menge an Formlingen konstant gehalten wird. Zu diesem Zwecke wird das Steuer-bzw. Regelgerät 22 vorzugsweise auch zur Regelung der Zufuhrmenge an Formlingen herangezogen, indem es entweder unmittelbar zur Regelung der Drehzahl der Formeinrichtung - (vgl. die Verbindung zum Motor des Extruders 2a) und/oder zur Regelung der Zufuhrmenge im Mengenregler 17 dient, wo dementsprechend eine die Grösse der Zufuhröffnung regelnde Klappe 60 vorgesehen ist. Über eine Umschalteinrichtung 59 ist wahlweise der Extrudermotor, die Klappe 60 oder beide regelbar. Somit treten jedenfalls am Ausgange 38 der Trommel 19 die fertig besprühten Formlinge 44 mit einer Vitamin-oder Medikamentenschicht aus.

Es sei erwähnt, dass eine Abwandlung der Anordnung darin bestehen kann, dass die Steuereinrichtung 22 auch den Dosierapparat 29 bzw. das Ventil 32 steuert. Eine weitere Abwandlung kann darin bestehen, dass die beiden Mischerbehälter 30, 33, statt in Serie, parallel geschaltet sind und wechselweise über den Dosierer 29 bzw. 31 befüllt und anschliessend an die Zufuhrleitung 39 zur Pumpe 34 abwechselnd angeschlossen werden. Selbstverständlich sind weitere Modifikationen möglich, insbesondere könnte die Aufsprühung bzw. Aufbringung des gesundheitsfördernden Mittels auch gesondert von einer Fettaufsprühung (oder ohne dieser) erfolgen, wobei man keineswegs an eine Trommel 19 gebunden ist. Im Prinzip kann jeder Mischer eingesetzt werden, doch ist die Anwendung der Trommel 19 besonders schonend und gleichzeitig für eine gleichmässige Verteilung besonders wirkungsvoll. In dieser Trommel erfolgt ja das Beimischen nicht nur durch das Aufsprühen mittels der Sprüheinrichtung 20, sondern auch durch ständiges Umwälzen, wobei an den Trommelwänden haftendes Sprühmaterial wiederum an die Oberfläche der Formlinge gelangt. Im vorliegenden Ausführungsbeispiel ist die Trommel 19 leicht geneigt, um eine Förderwirkung zu erzielen, doch kann dies ebenso dadurch erfolgen, dass - schneckengangartige Trennwände mit dem Trommelmantel 40 verbunden sind und senkrecht zu diesem in den von diesem Mantel 40 umschlossenen Hohlraum 41 der Trommel 19 ragen, wie dies bei Rösttrommeln bekannt ist.

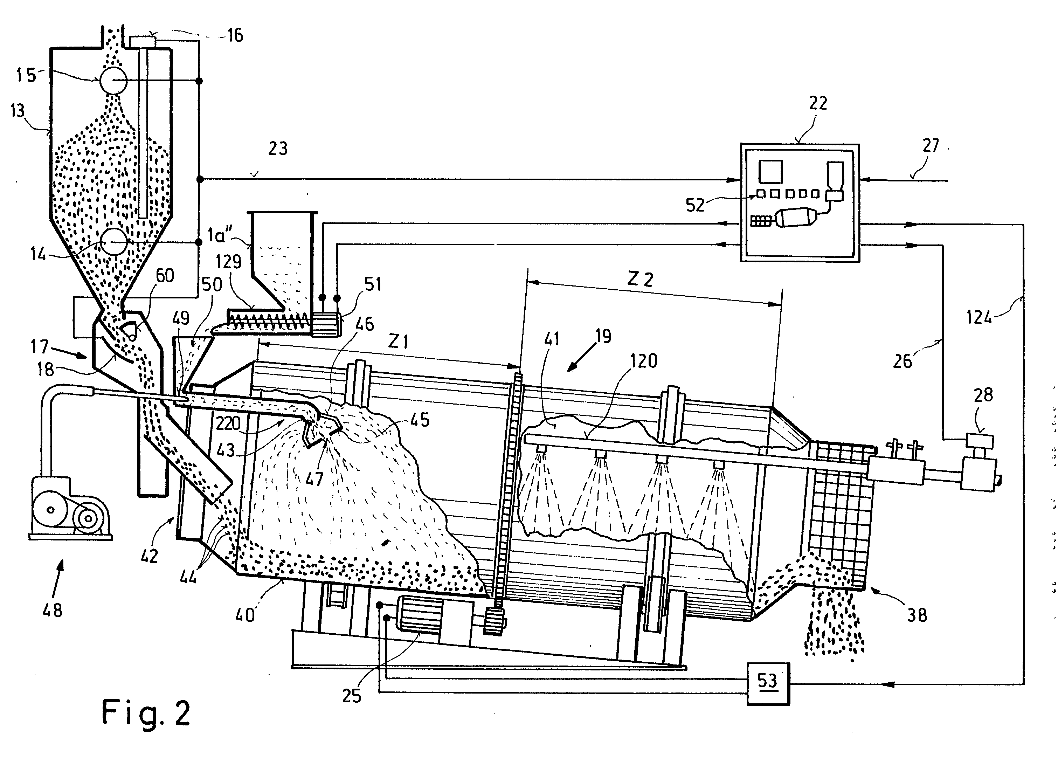

Bei der Ausführung nach Fig. 2 ist lediglich eine andere Art der Beimischung des gesundheitsfördernden Mittels innerhalb einer Trommel 19 dargestellt. Der übrige Teil der Anlage kann gleich ausgebildet sein, wie anhand der Fig. 1 beschrieben. Jedenfalls besitzen Teile gleicher Funktion in Fig. 2 die selben Bezugszeichen, wie in Fig. 1, Teile ähnlicher Funktion die selben Bezugszeichen, jedoch mit einer Hunderterziffer. Die Trommel 19 ist gemäss Fig. 2 in einer ähnlichen Anordnung dargestellt, wie in Fig. 1, wobei die Befüllung über ein Einlassende 42 und die Entleerung über das Auslassende 38 erfolgt.

Bei dieser Ausführung ist die Trommel 19 in zwei Verfahrenszonen Z1, Z2 unterteilt. Diese Unterteilung braucht nicht unbedingt durch bauliche Massnahmen, wie Trennwände od.dgl. erfolgen, obwohl es auch durchaus denkbar wäre, eine vom Trommelmantel 40 senkrecht nach innen abstehende Trennwand mit einer mittigen Oeffnung vorzusehen, um so die Behandlungszonen Z1, Z2 deutlicher voneinander zu trennen, wobei der Uebergang der Formlinge von einer Zone Z1 zur anderen Zone Z2 beispielsweise mit Hilfe einer Ueberhebeeinrichtung erfolgt, wie sie aus der CH-PS 53 631 oder den DE-OSen 26 59 169 bzw. 34 02 069 bekannt geworden sind. Das Ueberheben der Formlinge über die Trennwand erfolgt dabei verhältnismässig schonend entlang einer Spiralbahn, so dass ein grösserer Anteil von Bruch an den Formlingen vermieden werden kann.

Während in der zweiten Behandlungszone Z2 eine Sprüheinrichtung 120, insbesondere für flüssiges Fett vorhanden ist, die sich von der Besprühungseinrichtung 20 nach Fig. 1 nur dadurch unterscheidet, dass sie lediglich über die halbe Trommellänge reicht, ist in der ersten Behandlungszone Z1 eine Trockensprüheinrichtung 220, insbesondere zum Aufsprühen von pulverförmigen gesundheitsfördernden Mittel vorgesehen. Die Besprühungseinrichtung 220 ist, wie er sichtlich, lanzenförmig ausgebildet, wobei jedoch das Auslassende 43 dieser Lanze 220 zweckmässig noch innerhalb des Bereiches des Einlasses 42 angeordnet ist, d.h. im ersten Drittel der Behandlungszone Z1. Dadurch wird den eingespeisten Formlingen 44 in den verbleibenden zwei Dritteln Gelegenheit gegeben, sich im aufgesprühten gesundheitsfördernden Mittel zu wälzen, wobei eine gleichmässige Aufbringung auf die Oberfläche dieser Formlinge 44 erfolgt. Zusätzlich kann aber zur Vergleichmässigung des Sprühstrahles das Auslassende 43 der Lanze 220 mit einer Aufweitvorrichtung versehen sein, die an sich jeder beliebigen, z.B. bei Farbspritzpistolen bekannter Art sein kann, im dargestellten Ausführungsbeispiel jedoch von einer Prall-oder Diffusorplatte 45 gebildet ist, die vor dem Auslassende 43 mit Hilfe von Stegen 46 gehalten ist und beispielsweise auch mit Löchern 47 versehen sein kann. Die Stege 46 gestatten jedoch auch ein Wegsprühen der Teilchen nach der Seite hin.

Es hat sich bei praktischen Versuchen herausgestellt, dass durch das Besprühen der Oberfläche überraschenderweise eine gleichmässigere Verteilung des gesundheitsfördernden Mittels erzielt wird, als mit der herkömmlichen Methode. Dies mag daran liegen, dass die Oberfläche (die sich mit zunehmendem Volumen nur mit der 2.Potenz vergrössert, das Volumen dagegen mit der dritten) relativ kleiner ist und die Möglichkeit von Ungleichmässigkeiten daher geringer ist, als wenn das Mittel innerhalb des Volumens verteilt werden muss.

Das Besprühen erfolgt zweckmässig in trockenem Zustande, wozu ein Luftpumpen-Aggregat 48 vorgesehen ist, das Sprühluft zu einer Injektordüse 49 fördert. Die Injektordüse 49 könnte zwar auch gegen das Auslassende 43 angeordnet sein, doch werden dann meist zusätzliche Vorrichtungen nötig sein, um den ungestörten Transport des, zweckmässig pulverförmig angelieferten gesundheitsfördernden Mittels zu sichern. Vorzugsweise ist daher die Injektordüse 49 im Bereiche eines trichterförmigen Einlasses 50 angeordnet und erfüllt somit eine doppelte Funktion, nämlich einerseits zur Zerstäubung, anderseits zur Förderung des gesundheitsfördernden Mittels über die Länge der Lanze 220. Das Aufsprühen im trockenen Zustande bringt nicht nur eine apparative Vereinfachung, denn gegenüber der Anordnung der Fig. 1 fallen ja die Anlagenteile 30, 33, 34 und 36, 37 weg, sondern ist auch für die aufzusprühenden Substanzen wesentlich schonender, so dass sich eine zusätzliche Verringerung der Verluste ergibt.

Dem Einlasstrichter 50 der Besprühungseinrichtung 220 ist ein der Dosiereinrichtung 29 (Fig. 1) ähnlicher Dosierapparat 129 für das pulverförmige Mittel angeschlossen, der beispielsweise unmittelbar mit einem Vorratsbehälter 1a″ des gesundheitsfördernden Mittels oder einer Mischung verschiedener solcher verbunden sein kann. Der Dosierapparat 129 wird von einem Motor 51 angetrieben, der seinerseits hinsichtlich seiner Drehzahl vom Steuergerät 22 geregelt wird, wobei als Eingangsgrösse die vom Durchflussmengenmesser 17 erfasste Menge der zugeführten Formlinge 44 dient. Mit Hilfe einer Tastatur 52 können gegebenenfalls die jeweils gewünschten Beimischungsverhältnisse (Soll-Werte) eingestellt werden. Ueber eine Leitung 124 und eine Reglerstufe 53 wird die Drehzahl des Motors 25 eingestellt.

Die Auswirkungen des erfindungsgemässen Verfahrens lassen sich anhand der folgenden Beispiele erkennen.

Beispiel 1:

Zunächst wurde zu Vergleichszwecken nach der herkömmlichen Methode gearbeitet und dabei der Gehalt an Vitaminen gemessen. Der Einfachheit halber wurden zunächst die Vergleichsmessungen am Vitamin C (Ascorbinsäure) vorgenommen. Dabei wurde, neben den Ausgangskomponenten für die Herstellung von Futterwürfeln, Ascorbinsäure in einem Ausmasse von 0,82 g/kg in einen Mischer 4a (Fig. 1) eingespeist. Die Masse durchlief den Extruder 2a und den Bandkühler 7, worauf eine neuerliche Messung vorgenommen wurde. Es zeigte sich, dass von den ursprünglichen 0,82 g/kg nur mehr 0,04 g/kg, d.h. rund ein Zwanzigstel, übrig geblieben war. Von diesem Rest wurde während der Lagerung selbstverständlich ein weiterer Teil zerstört, so dass nach zwei Wochen nur mehr 0,012 g/kg vorhanden waren - (verbleibender Rest: nur mehr 1/70 der ursprünglichen Zugabemenge).

Wollte man daher nach zwei Wochen noch eine wirksame Menge von wenigstens 0,24 g/kg erhalten, so musste der ursprünglichen Mischung beinahe das Siebzigfache der Menge beigemischt werden.

Beispiel 2

Es wurden nochmals Futterwürfel hergestellt, wobei jedoch in den Mischer 4a (Fig. 1) keinerlei Vitamine beigegeben wurden, vielmehr zur Beimischung derselben eine Besprühungstrommel 19 gemäss Fig. 1 Anwendung fand, wobei Ascorbinsäure zusammen mit flüssigem Fett als Haftvermittler aufgesprüht wurde. Dabei wurde von vorneherein eine geringere Menge, nämlich 0,65 g/kg, d.h. nur etwa 80% der im vorigen Beispiel verwendeten Menge, beigemischt. Nach einer Woche Lagerzeit wurde eine Zwischenmessung durchgeführt, die zeigte, dass immer noch 0,42 g/kg vorhanden waren, während eine weitere Messung nach zwei Wochen noch einen Anteil von 0,286 g/kg ergab, was etwa den Wünschen entsprach. Der Rest betrug hier also immerhin noch 5/12 der ursprünglichen Menge.

Beispiel 3

Es wurde mit der gleichen Versuchsanordnung gearbeitet, jedoch die Sprühtrommel 19 nach Fig. 1 durch eine solche nach Fig. 2 ersetzt, wobei das Vitamin als Pulver mit einer Korngrösse zwischen 0,1 bis 0,3 mm aufgesprüht wurde. Ueber die Besprühungseinrichtung 120 wurde anschliessend das bei Futterwürfeln übliche Fett aufgesprüht.

Die Dosierung am Dosierapparat 129 war derart eingestellt, dass 0,74 g an Vitamin C pro kg. der angelieferten Futterpellets bei gemischt wurde. Eine Zwischenmessung nach einer Woche zeigte einen Rest an Vitamin C von 0,52 g/kg und eine Messung nach zwei Wochen einen Rest von 0,407 g/kg, d.s. etwa 4/7 der ursprünglichen Menge. Die Trockenbesprühung zeitigte also ein noch besseres Resultat.

Die Versuche wurden anschliessend auch mit anderen Vitaminen, nämlich Vitamin B₁, B₂, B₆, B₁₂, Vitamin A, Vitamin K₃, mit den Vitaminen D und E sowie mit den gesundheitsfördernden Mitteln d-Pantothen, Biotin, Folsäure, Inositol und Cholinchlorid durchgeführt, wobei sich die Verluste in ähnlicher Weise durch das erfindungsgemässe Verfahren verringerten. Ferner wurden an Stelle von Fett noch andere Haftvermittler, wie Gelatine, Stärke, Pektine und Proteine verwendet, wobei sich in manchen Anwendungsfällen eine Mischung von Fett mit mindestens einem zweiten Haftvermittler als vorteilhaft erwies.

Im Rahmen der Erfindung sind zahlreiche Modifikationen denkbar; beispielsweise kann das Auslassende 43 der Lanze 220 mit einer oder mehreren Düsen zur nebelartigen Verteilung des Pulvers innerhalb der Behandlungszone Z1 ausgerüstet sein.

**Ansprüche**

1. Verfahren zum Herstellen von Formlingen eines Nahrungsmittels, bei dem dem Ausgangsmaterial wenigstens ein gesundheitsförderndes Mittel beigemischt wird, und bei dem in einem Formvorgang die Formlinge hergestellt werden, **dadurch gekennzeichnet**, dass das Beimischen nach dem Formen durch Aufbringen des gesundheitsfördernden Mittels auf die Oberfläche der Formlinge erfolgt.

2. Verfahren nach Anspruch 1, dadurch gekennzeichnet, dass das Beimischen durch Aufsprühen des gesundheitsfördernden Mittels auf die Oberfläche der Formlinge und/oder unter Wälzen der Formlinge in einer das gesundheitsfördernde Mittel enthaltenden Umgebung erfolgt.

3. Verfahren nach Anspruch 1 oder 2, dadurch gekennzeichnet, dass das Aufbringen auf die Oberfläche kontinuierlich erfolgt
und/oder
dass das Beimischen des gesundheitsfördernden Mittels im trockenen Zustand, insbesondere in Form eines trockenen Pulvers, erfolgt, und dass vorzugsweise das Pulver eine Korngrösse von höchstens 0,2mm, zweckmässig höchstens 0,1mm, bevorzugt innerhalb eines Bereiches von 0,01 bis 0,08mm, besitzt.

4. Verfahren nach einem der Ansprüche 1 bis 3, dadurch gekennzeichnet, dass wenigstens ein gesundheitsförderndes Mittel unter, bevorzugt gleichzeitiger, Zugabe eines Haftvermittlers, z.B. einer flüssigen Substanz, vorzugsweise wenigstens einer essbaren Substanz, wie Gelatine, Stärke, Pektine, Proteine, bevorzugt einer Fettsubstanz, insbesondere Öl, gegebenenfalls in Form einer Lösung oder Suspension in dieser Substanz, beigemischt wird,
dass bevorzugt das Beimischen in einem gemeinsamen Apparat, insbesondere in einer Fettbesprühungstrommel, erfolgt,

und dass zweckmässig das gesundheitsfördernde Mittel in trockenem Zustand vor dem Aufsprühen der flüssigen Substanz auf die Formlinge aufgebracht wird.

5. Verfahren nach einem der Ansprüche 1 bis 4, dadurch gekennzeichnet, dass auf die Oberfläche der Formlinge wenigstens ein Vitamin und/oder
wenigstens ein Medikament als gesundheitsförderndes Mittel aufgebracht wird.

6. Anlage zum Herstellen von Formlingen eines Nahrungsmittels unter Durchführung des Verfahrens nach einem der Ansprüche 1 bis 5, mit einer Formeinrichtung zum Herstellen der Formlinge und einer Mischeinrichtung zum Beimischen wenigstens eines gesundheitsfördernden Mittels, **dadurch gekennzeichnet**, dass die Mischeinrichtung (19) für das gesundheitsfördernde Mittel nach der Formeinrichtung (2, 2a) angeordnet ist.

7. Anlage nach Anspruch 6, dadurch gekennzeichnet, dass der Eingang der Mischeinrichtung (19) mit dem Ausgang der Formeinrichtung (2 bzw. 2a) über wenigstens eine Fördereinrichtung (6, 8, 12) verbunden ist
und/oder
dass die Mischeinrichtung (19) eine Sprüheinrichtung (20; 220) für das gesundheitsfördernde Mittel aufweist.

8. Anlage nach Anspruch 6 oder 7, dadurch gekennzeichnet, dass eine Regeleinrichtung (22) für die Zufuhr wenigstens einer zu mischenden Komponente, d.h. der Formlinge und/oder des gesundheitsfördernden Mittels, zwecks Beibehaltung des Mischungsverhältnisses vorgesehen ist
und/oder
die Mischeinrichtung eine Wälzeinrichtung (19) für die Formlinge (44) zum Wälzen derselben unter gleichzeitiger Beigabe des gesundheitsfördernden Mittels aufweist,
dass vorzugsweise die Wälzeinrichtung eine Trommel (19), insbesondere eine Fettbesprühungstrommel mit einer Aufsprüheinrichtung (20; 120) für dasselbe, aufweist, innerhalb welcher die Formlinge (44) umwälzbar sind.

9. Besprühungstrommel für eine Anlage nach einem der Ansprüche 6 bis 8, mit einem einen Hohlraum umschliessenden Trommelmantel, in dem wenigstens eine Besprühungseinrichtung angeordnet ist, dadurch gekennzeichnet, dass die Besprühungseinrichtung eine Pulversprüheinrichtung (220) aufweist.

10. Trommel nach Anspruch 9, dadurch gekennzeichnet, dass die Pulversprüheinrichtung mindestens eine Injektoreinrichtung (220) mit einer Injektordüse (49) aufweist, und dass vorzugsweise die Injektoreinrichtung eine in den Hohlraum (41) ragende, sich zweckmässig innerhalb des Einlassbereiches desselben erstreckende, Lanze (220) besitzt, wobei zweckmässig die Injektordüse (49) im Bereiche des Einlassendes (50) dieser Lanze (220) vorgesehen ist, und wobei insbesondere die Lanze (220) an ihrem Auslassende (43) eine Aufweit- bzw. Vernebelungsvorrichtung (45) für den Sprühstrahl aufweist

und/oder

dass der Pulversprüheinrichtung (220) wenigstens ein Dosiergerät (129) vorgeschaltet ist.

11. Besprühungstrommel für eine Anlage nach einem der Ansprüche 6 bis 8, mit einem einen Hohlraum umschliessenden Trommelmantel, in dem wenigstens eine Besprühungseinrichtung angeordnet ist, dadurch gekennzeichnet, dass wenigstens zwei Besprüheinrichtungen (120, 220) innerhalb der Trommel (19) angeordnet sind, wovon wenigstens eine mit einer Zufuhreinrichtung (129) für zumindest ein gesundheitsförderndes Mittel verbunden ist.

Fig.1

Fig. 2

0 231 817